# EUROPEAN PATENT APPLICATION

(11) **EP 1 925 205 A1**
(43) Date of publication of application: **28.05.2008**
(21) Application number: 07022335.9
(22) Date of filing: 17.11.2007
(51) Int. Cl.: A01N 57/26, A01N 57/16, A01N 57/14, A01N 57/12, A01N 47/24, A01P 5/00, A01C 1/06

(54) **Plant propagation material treatment nematicides**

(30) Priority: 23.11.2006 EP 06024277
(71) Applicant: Sygenta Participations AG., 4058 Basel (CH)
(72) Inventor: Grimm, Christoph, 4332 Stein (CH); Hofer, Dieter, 4058 Basel (CH); Müller, Kaspar, 4058 Basel (CH)
(74) Representative: Arunasalam, Velautha-Cumaran

(57) **Abstract**

A method of protecting a plant propagation material and plant organs which grow at a later point in time against attack by a pest, which comprises treating the a plant propagation material with a pesticidal composition comprising one or more selected from isazofos, fosthiazate, cadusafos, fenamiphos, fensulfothion and aldicarb, and at least one auxiliary.

## Description

The present invention relates to a method for using a defined compound in the control or prevention of damage to plant propagation material and plant organs that grow at a later point in time, by applying or treating the compound to the plant propagation material, plant propagation material compositions thereof and combinations of such a compound with certain pesticide(s) for use in treating plant propagation material.

The art teaches many compounds as having nematicidal activity, especially as soil application, e.g. aldicarb, carbofuran, carbosulfan, oxamyl, aldoxycarb, ethoprop benomyl, alanycarb, henamiphos, fenamiphos, fensulfothion, terbufos, fosthiazate, dimethoate, phosphocarb, dichlofenthion, isamidofos, fosthietan, isazofos, ethoprophos, cadusafos, terbufos, chlorpyrifos, dichlofenthion, heterophos, isamidofos, mecarphon, phorate, thionazin, triazophos, diamidafos, fosthietan, and phosphamidon.

The art also discloses a method of protecting a seed and plant organs which grow at a later point in time against attack by a pest selected from the class Insecta, class Arachnida and class Nematoda, which comprises treating the seed with a pesticidal composition comprising as active ingredient Emamectin, Abamectin or Spinosad: see WO99/33343.

Applicant has now found that isazofos, fosthiazate, cadusafos, fenamiphos, fensulfothion and aldicarb are also suited for protecting plant propagation material and plant organs that grow at a later point in time against attack by a pest, when the plant propagation material is treated with one or more of isazofos, fosthiazate, cadusafos, fenamiphos, fensulfothion and aldicarb.

The treatment of plant propagation material is a targeted pesticide application which addresses the need for a reduction of environmental and worker exposure compared to foliar or soil pesticide applications.

Accordingly, in a first aspect the present invention provides a method of protecting a plant propagation material and plant organs which grow at a later point in time against attack by a pest, especially a pest selected from the class Nematoda, which comprises treating the a plant propagation material with a pesticidal composition comprising one or more isazofos, fosthiazate, cadusafos, fenamiphos, fensulfothion and aldicarb, and at least one auxiliary.

In a second aspect, the present invention provides a method of controlling damage by a pest, especially a pest selected from the class Nematoda, to crop plants, which comprises treating a plant propagation material of the crop plant with a pesticidal composition comprising one or more isazofos, fosthiazate, cadusafos, fenamiphos, fensulfothion and aldicarb, and at least one auxilary.

The invention also relates to a plant propagation material treated with one or more selected from isazofos, fosthiazate, cadusafos, fenamiphos, fensulfothion and aldicarb.

Further, a plant propagation material treatment composition comprising one or more selected from isazofos, fosthiazate, cadusafos, fenamiphos, fensulfothion and aldicarb, and at least one auxilary is hereby made available.

In a preferred embodiment, fosthiazate and cadusafos are preferred plant propagation material treatment compounds, especially for control of a pest of the class Nematoda.

Details (e.g., structure, chemical name, commercial names, etc) of each of the pesticides with a common name can be found in the e-Pesticide Manual, version 3.1, 13th Edition, Ed. CDC Tomlin, British Crop Protection Council, 2004-05.

Each of the compounds defined in the first aspect, when applied to plant propagation material, especially seed, can have very advantageous properties for protecting plants against soil-inhabiting nematodes; the present invention can control or prevent damage on a seed, parts of plant and/or plant grown from the treated plant propagation material, such as a seed.

In an embodiment, the pest controlled is a pest selected from the class Nematoda.

Examples of pests from the class Nematoda are the species of Meloidogyne spp. (for example, Meloidogyne incognita, Meloidogyne arenaria, Meloidogyne hapla, Meloidogyne chitwoodi and Meloidogyne javanica), Heterodera spp. (for example, Heterodera glycines, Heterodera schachtii, Heterodora avenae and Heterodora trifolii), Globodera spp. (for example, Globodera rostochiensis), Radopholus spp. (for example, Radopholus similes), Rotylenchulus spp., Pratylenchus spp. (for example, Pratylenchus neglectans and Pratylenchus penetrans), Aphelenchoides spp., Helicotylenchus spp., Hoplolaimus spp., Paratrichodorus spp., Longidorus spp., Nacobbus spp., Subanguina spp. Belonolaimus spp., Criconemella spp., Criconemoides spp. Ditylenchus spp., Dolichodorus spp., Hemicriconemoides spp., Hemicycliophora spp., Hirschmaniella spp., Hypsoperine spp., Macroposthonia spp., Melinius spp., Punctodera spp., Quinisulcius spp., Scutellonema spp., Xiphinema spp., and Tylenchorhynchus spp. Isazofos, fosthiazate, cadusafos, fenamiphos, fensulfothion and aldicarb have been found to be effective against Meloidogyne spp., for example, Meloidogyne incognita.

The protection, prevention or control of nematodes result in an improvement in the growing characteristics of a treated plant by, for example, improved yield, height, root mass, and minimized disease or insect damage.

The improvement in the growing (or growth) characteristics of a plant can manifest in a number of different ways, but ultimately it results in a better product of the plant. It can, for example, manifest in improving the yield and/or vigour of the plant or quality of the harvested product from the plant, which improvement may not be connected to the control of diseases and/or pests.

As used herein the phrase "improving the yield" of a plant relates to an increase in the yield of a product of the plant by a measurable amount over the yield of the same product of the plant produced under the same conditions, but without the application of the subject method. It is preferred that the yield be increased by at least about 0.5%, more preferred that the increase be at least about 1 %, even more preferred is about 2%, and yet more preferred is about 4%, or more. Yield can be expressed in terms of an amount by weight or volume of a product of the plant on some basis. The basis can be expressed in terms of time, growing area, weights of plants produced, amount of a raw material used, or the like.

As used herein the phrase "improving the vigour" of a plant relates to an increase or improvement of the vigour rating, or the stand (the number of plants per unit of area), or the plant height, or the plant canopy, or the visual appearance (such as greener leaf colour), or the root rating, or emergence, or protein content, or increased tillering, or bigger leaf blade, or less dead basal leaves, or stronger tillers, or less fertilizer needed, or less seeds needed, or more productive tillers, or earlier flowering, or early grain maturity, or less plant verse (lodging), or increased shoot growth, or earlier germination, or any combination of these factors, or any other advantages familiar to a person skilled in the art, by a measurable or noticeable amount over the same factor of the plant produced under the same conditions, but without the application of the subject method.

When it is said that the present method is capable of "improving the yield and/or vigour" of a plant, the present method results in an increase in either the yield, as described above, or the vigor of the plant, as described above, or both the yield and the vigor of the plant.

Accordingly, the present invention also provides a method of improving the growing characterictics of a plant, which comprises applying to a plant propagation material one or more selected from isazofos, fosthiazate, cadusafos, fenamiphos, fensulfothion and aldicarb.

The rates of application (use) of one or more selected from isazofos, fosthiazate, cadusafos, fenamiphos, fensulfothion and aldicarb, vary, for example, according to type of crop, the specific active ingredient, the number of active ingredients, type of plant propagation material but is such that the active ingredient(s) is an effective amount to provide the desired action (such as disease or pest control) and can be determined by trials.

Generally for seed treatment, application rates of each of isazofos, fosthiazate, cadusafos, fenamiphos, fensulfothion and aldicarb can vary from 0.1 µg to 100mg, preferably 0.5 µg to 50mg, more preferably 1 µg to 10mg, especially 0.1 to 2 mg, of AI /seed.

In an embodiment of each aspect, application rate of cadusafos is from 0.2 to 1.5, preferably 0.2 to 0.9, mg ai/seed, especially on a cotton seed.

In an embodiment of each aspect, application rate of isazofos is from 0.7 to 1.5 mg ai/seed, especially on a tomato seed.

In an embodiment of each aspect, application rate of fosthiazate is from 0.7 to 1.5 mg ai/seed, especially on a tomato seed.

In an embodiment of each aspect, application rate of fenamiphos or fensulfothion is from 0.7 to 1.5 mg ai/seed, especially on a tomato seed.

In an embodiment of each aspect, application rate of aldicarb is from 0.7 to 1.5 mg ai/seed, especially on a tomato seed.

The seed treatment combination and composition can also comprise or may be applied together and/or sequentially with further active compounds. These further compounds can be fertilizers or micronutrient donors or other preparations that influence plant growth, such as inoculants (e.g. a strain of nitrogen-fixing bacteria), plant inducers (e.g. nod factors - see US2005187107, which hereby incorporated).

A single pesticidal active ingredient may have activity in more than one area of pest control, for example, a pesticide may have fungicide, insecticide and nematicide activity. Specifically, aldicarb is known for insecticide, acaricide and nematicide activity, while metam is known for insecticide, herbicide, fungicide and nematicide activity, and thiabendazole and captan can provide nematicide and fungicide activity.

The compound defined in the first aspect of the present invention may be mixed with other ST pesticides, such as fungicides, insecticides and other nematicides.

When one or more selected from isazofos, fosthiazate, cadusafos, fenamiphos, fensulfothion and aldicarb is used in combination with one or more pesticides, a synergistically enhanced activity can be observed, for example, resulting in improved pesticidal properties in any one of disease and pest, e.g., fungicidal, insecticidal, nematicidal, control.

These properties can be for example the unexpected enhanced action resulting in lower pathogenic damage and/or pest damage, lower rates of application, or a longer duration of action. In the instance of agriculture, the enhanced action is found to show an improvement in the growing characteristics of a plant by, for example, higher than expected control of the pathogenic infestation and/or pest damage.

The present invention, in an embodiment, is believed to prevent damage to the plant by nematodes, and thus improve the growth characteristics, through improved control of such nematodes.

The improvement in the growing (or growth) characteristics of a plant can manifest in a number of different ways, but ultimately it results in a better product of the plant. It can, for example, manifest in improving the yield and/or vigour of the plant or quality of the harvested product from the plant.

As used herein the phrase "improving the yield" of a plant relates to an increase in the yield of a product of the plant by a measurable amount over the yield of the same product of the plant produced under the same conditions, but without the application of the subject method. It is preferred that the yield be increased by at least about 0.5%, more preferred that the increase be at least about 1%, even more preferred is about 2%, and yet more preferred is about 4%, or more. Yield can be expressed in terms of an amount by weight or volume of a product of the plant on some basis. The basis can be expressed in terms of time, growing area, weight of plants produced, amount of a raw material used, or the like.

As used herein the phrase "improving the vigour" of a plant relates to an increase or improvement of the vigour rating, or the stand (the number of plants per unit of area), or the plant height, or the plant canopy, or the visual appearance (such as greener leaf colour), or the root rating, or emergence, or protein content, or increased tillering, or bigger leaf blade, or less dead basal leaves, or stronger tillers, or less fertilizer needed, or less seeds needed, or more productive tillers, or earlier flowering, or early grain maturity, or less plant verse (lodging), or increased shoot growth, or earlier germination, or any combination of these factors, or any other advantages familiar to a person skilled in the art, by a measurable or noticeable amount over the same factor of the plant produced under the same conditions, but without the application of the subject method.

In an embodiment of each aspect, a combination comprising the compound defined in the first aspect (i.e. one or more selected from isazofos, fosthiazate, cadusafos, fenamiphos, fensulfothion and aldicarb) and one or more pesticides are applied to a plant propagation material, in any desired sequence or simultaneously. Accordingly, the invention also provides a combination comprising a compound defined in the first aspect (i.e. one or more selected from isazofos, fosthiazate, cadusafos, fenamiphos, fensulfothion and aldicarb) and one or more pesticides, and its use in the method defined in the first aspect.

Examples of fungicidal active ingredients include azoxystrobin; fluoxastrobin, bitertanol; benalaxyl, benalaxyl-M, carboxin; Cu₂O; cymoxanil; cyproconazole; cyprodinil; dichlofluamid; difenoconazole; diniconazole; epoxiconazole; fenpiclonil; fludioxonil; fluquiconazole; flusilazole; flutriafol; furalaxyl; guazatin; hexaconazole; hymexazol; imazalil; imibenconazole; ipconazole; kresoxim-methyl; mancozeb; metalaxyl; R-metalaxyl; metconazole; myclobutanil; oxadixyl, pefurazoate; penconazole; pencycuron; prochloraz; propiconazole; pyroquilone; spiroxamin; tebuconazole; thiram, thiabendazole; tolifluamide; trifloxystrobin, triazoxide; triadimefon; triadimenol; triflumizole; triticonazole and uniconazole.

Examples of insecticidal active ingredients include thiamethoxam, imidacloprid, acetamiprid, nitenpyram, thiocloprid, dinotefuran, clothianidin, lamda-cyhalothrin, tefluthrin, β-cyfluthrin, permethrin, abamectin, fipronil, thiodicarb and spinosad.

Each of isazofos, fosthiazate, cadusafos, fenamiphos, fensulfothion and aldicarb or a combination thereof with one or more further active compounds, such as pesticides, can be formulated for a particular use. Preferably, isazofos, fosthiazate, cadusafos, fenamiphos, fensulfothion or aldicarb, or a combination thereof, optionally with one or more further active compounds, are formulated for treating or applying to plant propagation materials, such that plant propagation materials and plant organs that grow at a later point in time are protected against damage from pests, such as nematodes.

Each of the compounds defined in the first aspect and combinations thereof when applied to plant propagation material, especially seed, can have very advantageous properties for protecting plants against (i) pathogenic, such as phytopathogenic, especially fungi, attack or infestation, which result in a disease and damage to the plant and/or (ii) pest attack or damage; the present invention, therefore, can control or prevent pathogenic damage and/or pest damage on a plant propagation material, such as a seed, and plant organs that grow at a later point in time.

Controlling, preventing or protecting and its inflections, within the context of the present invention, mean reducing any undesired effect, such as
- pathogenic, such as phytopathogenic, especially fungi, infestation or attack of, and
- pathogenic damage or pest damage on,
plant propagation material or plant organs that grow at a later point in time to such a level that an improvement is demonstrated.

The plant propagation material treated by one or more compounds defined in the first aspect and one or further active compounds are, therefore, resistant to disease and/or pest damage; accordingly, the present invention also provides a pathogenic and/or pest resistant plant propagation material which is treated with one or more compounds defined in the first aspect and one or further active compounds and consequently at least the active ingredients thereof are adhered on the propagation material, such a seed.

In the instance, more than one active ingredient is used to treat a plant propagation material, the weight between any two is selected as to give the desired, for example, synergistic, action. In general, the weight ratio would vary depending on the specific pesticide and how many pesticides are present in the combination. Generally, the weight ratio between any two active ingredients is from 100:1 to 1:100, preferably from 75:1 to 1:75, more preferably, 50:1 to 1.50, especially 25:1 to 1:25, advantageously 10:1 to 1:10.

Typically for seed treatment, the complete active ingredients application rates can vary from 0.1 µg to 10 g of AI/seed.

The benefit from the invention can also be achieved either (i) by treating plant propagation material with one or more of the compounds defined in the first aspect or (ii) by step (i) followed by applying to the locus where control is desired, generally the planting site, the one or more of the compounds defined in the first aspect.

The term "plant propagation material" is understood to denote all the generative parts of the plant, including but not limited to seeds, which can be used for the multiplication of the latter and vegetative plant material such as cuttings and tubers (for example, potatoes). There may be mentioned, e.g., the seeds (in the strict sense), roots, fruits, tubers, bulbs, rhizomes, parts of plants. Germinated plants and young plants, which are to be transplanted after germination or after emergence from the soil, may also be mentioned. A preferred plant propagation material is the seed. In an aspect of the present invention, these young plants and generative parts may be protected before transplantation by a total or partial treatment, for example, by treatment, for example by immersion, by a pesticide, e.g. in the form of a pesticidal composition, according to the present invention. The term "seed" to be treated with the compositions of the present invention means a plant body of the initial stage of cultivation used for reproduction of plants, and involves not only the so-called seeds but also plant bodies for nutrient reproduction such as bulb, tuber, seed tuber, aerial tuber, scaly bulb, stalks for cuttage, and the like.

Methods for applying or treating pesticidal active ingredients and mixtures thereof on to plant propagation material, especially seeds, are known in the art, and include dressing, coating, pelleting and soaking application methods of the propagation material.

The active ingredients can be applied to the seeds using conventional treating techniques and machines, such as fluidized bed techniques, the roller mill method, rotostatic seed treaters, and drum coaters. Other methods, such as spouted beds may also be useful. The seeds may be presized before coating. After coating, the seeds are typically dried and then transferred to a sizing machine for sizing. Such procedures are known in the art.

In a preferred embodiment, the active ingredient(s) is applied or treated on to the plant propagation material by a method such that the germination is not induced; generally seed soaking induces germination because the moisture content of the resulting seed is too high.

Accordingly, examples of suitable methods for applying (or treating) a plant propagation material, such as a seed, is seed dressing, seed coating or seed pelleting and the like.

It is preferred that the plant propagation material is a seed. Although it is believed that the present method can be applied to a seed in any physiological state, it is preferred that the seed be in a sufficiently durable state that it incurs no damage during the treatment process. Typically, the seed would be a seed that had been harvested from the field; removed from the plant; and separated from any cob, stalk, outer husk, and surrounding pulp or other non-seed plant material. The seed would preferably also be biologically stable to the extent that the treatment would cause no biological damage to the seed. It is believed that the treatment can be applied to the seed at any time between harvest of the seed and sowing of the seed or during the sowing process (seed directed applications). The seed may also, optionally, be primed either before or after the treatment.

Even distribution of the active ingredients and adherence thereof to the propagation materials is desired during propagation material treatment. Treatment could vary from a thin film (dressing) of the formulation containing the active ingredient(s) on a plant propagation material, such as a seed, where the original size and/or shape are recognizable to an intermediary state (such as a coating) and then to a thicker film (such as pelleting with many layers of different materials (such as carriers, for example, clays; different formulations, such as of other active ingredients; polymers; and colourants) where the original shape and/or size of the seed is no longer recognisable.

The seed treatment occurs to an unsown seed, and the term "unsown seed" is meant to include seed at any period between the harvest of the seed and the sowing of the seed in the ground for the purpose of germination and growth of the plant.

Treatment to an unsown seed is not meant to include those practices in which the active ingredient is applied to the soil but would include any application practice that would target the seed during the planting process.

Preferably, the treatment occurs before sowing of the seed so that the sown seed has been pretreated with the desired compound. In particular, seed coating or seed pelleting are preferred in the treatment of the compound according to the invention. As a result of the treatment, the active ingredients are adhered on to the seed and therefore available for pest and/or disease control.

The treated seeds can be stored, handled, sowed and tilled in the same manner as any other active ingredient treated seed.

Suitable plants of the crops include cereals (wheat, barley, rye, oats, corn, rice, sorghum, triticale and related crops); beet (sugar beet and fodder beet); leguminous plants (beans, lentils, peas, soybeans); oil plants (rape, mustard, sunflowers); cucumber plants (marrows, cucumbers, melons); fibre plants (cotton, flax, hemp, jute); vegetables (spinach, lettuce, asparagus, cabbages, carrots, onions, tomatoes, potatoes, paprika); as well as ornamentals (flowers, shrubs, broad-leaved trees and evergreens, such as conifers). Especially suitable are wheat, barley, rye, oats, corn, soybean, triticale, beet, cotton, cucumber plants and vegetables (such as tomatoes).

Suitable target crops also include transgenic crop plants of the foregoing types. The transgenic crop plants used according to the invention are plants, or propagation material thereof, which are transformed by means of recombinant DNA technology in such a way that they are - for instance - capable of synthesizing selectively acting toxins as are known, for example, from toxin-producing invertebrates, especially of the phylum Arthropoda, as can be obtained from Bacillus thuringiensis strains; or as are known from plants, such as lectins; or in the alternative capable of expressing a herbicidal or fungicidal resistance. Examples of such toxins, or transgenic plants which are capable of synthesizing such toxins, have been disclosed, for example, in EP-A-0 374 753, WO 93/07278, WO 95/34656, EP-A-0 427 529 and EP-A-451 878 and are incorporated by reference in the present application.

The active ingredient(s) may be used either in pure form, i.e., as a solid active ingredient, for example, in a specific particle size, or preferably together with at least one of the auxiliary (also known as adjuvants) customary in formulation technology, such as extenders, e.g., solvents or solid carriers, or surface-active compounds (surfactants), in the form of a formulation, in the present invention. Generally, the active ingredient(s) is in the form of a formulation composition with one or more of customary formulation auxiliaries.

Advantageously, each of the active ingredient compounds defined in the first aspect is formulated for plant propagation material, preferably seed, treatment applications for controlling or preventing damage by pests and/or pathogens, which are found in agriculture and forestry, and can particularly damage the plant in the early stages of its development.

In the instance two or more active ingredients (whether relating to, for example, two or more compounds defined in the first aspect or one compound defined in the first aspect and one or more further active compounds, such as pesticides) are used in the present invention, the active ingredients may be applied either simultaneously or in succession at short interval, if desired together with further carriers, surfactants or other application-promoting adjuvants customarily employed in formulation technology. In a preferred embodiment, the active ingredients are applied simultaneously.

In the event two or more active ingredients are applied simultaneously in the present invention, they may be applied as a composition, in which case each active ingredient can be obtained from a separate formulation source and mixed together (known as a tank-mix, ready-to-apply, spray broth, or slurry), or they can be obtained as single formulation mixture source (known as a pre-mix, concentrate, formulated compound (or product)).

In an embodiment, two or more active ingredients of the present invention are applied as a composition.

In a preferred embodiment of the invention, the composition is a pre-mix composition (or mixture).

Whereas, examples of seed treatment formulation types for pre-mix compositions are:
WS: wettable powders for seed treatment slurry
LS: solution for seed treatment
DS: powder for dry seed treatment
ES: emulsions for seed treatment
FS: suspension concentrate for seed treatment
WG: water dispersible granules, and
CS: aqueous capsule suspension.

Examples of formulation types suitable for tank-mix compositions are solutions, dilute emulsions, suspensions, or a mixture thereof, and dusts.

As with the nature of the formulations, the methods of application, such as foliar, drench, spraying, atomizing, dusting, scattering, coating or pouring, are chosen in accordance with the intended objectives and the prevailing circumstances. In the present invention, application of the formulations would generally involve any suitable application technique ensuring adherence of the active ingredient(s) to the plant propagation material.

The tank-mix compositions are generally prepared by diluting with a solvent (for example, water) the one or more pre-mix compositions containing different pesticides, and optionally further auxiliaries.

Suitable carriers and adjuvants can be solid or liquid and are the substances ordinarily employed in formulation technology, e.g. natural or regenerated mineral substances, solvents, dispersants, wetting agents, tackifiers, thickeners, binders or fertilizers.

The formulations are prepared in known manner, e.g., by homogeneously mixing and/or grinding the active ingredients with extenders, e.g., solvents, solid carriers and, where appropriate, surface-active compounds (surfactants).

Suitable solvents are: aromatic hydrocarbons, preferably the fractions containing 8 to 12 carbon atoms, e.g. xylene mixtures or substituted naphthalenes, phthalates, such as dibutyl phthalate or dioctyl phthalate, aliphatic hydrocarbons, such as cyclohexane or paraffins, alcohols and glycols and their ethers and esters, such as ethanol, ethylene glycol, ethylene glycol monomethyl or monoethyl ether, ketones, such as cyclohexanone, strongly polar solvents, such as N-methyl-2-pyrrolidone, dimethyl sulfoxide or dimethylformamide, as well as vegetable oils or epoxidised vegetable oils, such as epoxidised coconut oil or soybean oil; or water.

The solid carriers used, e.g., for dusts and dispersible powders, are normally natural mineral fillers, such as calcite, talcum, kaolin, montmorillonite or attapulgite. In order to improve the physical properties it is also possible to add highly dispersed silicic acid or highly dispersed absorbent polymers. Suitable granulated adsorptive carriers are porous types, for example pumice, broken brick, sepiolite or bentonite, and suitable nonsorbent carriers are, for example, calcite or sand. In addition, a great number of pregranulated materials of inorganic or organic nature can be used, e.g., especially dolomite or pulverized plant residues.

Depending upon the nature of the active ingredient compounds to be formulated, suitable surface-active compounds are non-ionic, cationic and/or anionic surfactants having good emulsifying, dispersing and wetting properties. The term "surfactants" will also be understood as comprising mixtures of surfactants.

Particularly advantageous application-promoting adjuvants are also natural or synthetic phospholipids of the cephalin and lecithin series, e.g., phosphatidylethanolamine, phosphatidylserine, phosphatidylglycerol and lysolecithin.

Normally, a tank-mix formulation for seed treatment application comprises 0.25 to 80%, especially 1 to 75 %, active ingredient compounds, and 99.75 to 20 %, especially 99 to 25 %, of a solid or liquid auxiliaries (including, for example, a solvent such as water), where the auxiliaries can be a surfactant in an amount of 0 to 40 %, especially 0.5 to 30 %, based on the tank-mix formulation.

Typically, a pre-mix formulation for seed treatment application comprises 0.5 to 99.9 %, especially 1 to 95 %, active ingredient compounds, and 99.5 to 0.1 %, especially 99 to 5 %, of a solid or liquid adjuvant (including, for example, a solvent such as water), where the auxiliaries can be a surfactant in an amount of 0 to 50 %, especially 0.5 to 40 %, based on the pre-mix formulation.

Whereas commercial products will preferably be formulated as concentrates (e.g., pre-mix composition (formulation)), the end user will normally employ dilute formulations (e.g., tank mix composition).

Preferred seed treatment pre-mix formulations are aqueous suspension concentrates. The formulation can be applied to the seeds using conventional treating techniques and machines, such as fluidized bed techniques, the roller mill method, rotostatic seed treaters, and drum coaters. Other methods, such as spouted beds may also be useful. The seeds may be presized before coating. After coating, the seeds are typically dried and then transferred to a sizing machine for sizing. Such procedures are known in the art.

The Examples which follow serve to illustrate formulations according to the invention, "active ingredient" denoting a compound defined in the first aspect or a combination thereof, optionally with another pesticide(s).

The Examples are in no way intended to be limiting in nature, i.e., other similar adjuvants known in the art may be substituted for the specifically-disclosed adjuvants provided below.

Formulation Examples

| Wettable powders | a) | b) | c) |
|---|---|---|---|
| active ingredient | 25 % | 50 % | 75 % |
| sodium lignosulfonate | 5 % | 5 % | - |
| sodium lauryl sulfate | 3 % | - | 5 % |
| sodium diisobutylnaphthalenesulfonate | - | 6 % | 10 % |
| phenol polyethylene glycol ether (7-8 mol of ethylene oxide) | - | 2 % | - |
| highly dispersed silicic acid | 5 % | 10 % | 10 % |
| Kaolin | 62 % | 27 % | - |

The active ingredient is thoroughly mixed with the adjuvants and the mixture is thoroughly ground in a suitable mill, affording wettable powders that can be diluted with water to give suspensions of the desired concentration.

| Powders for dry seed treatment | a) | b) | c) |
|---|---|---|---|
| active ingredient | 25 % | 50 % | 75 % |
| light mineral oil | 5 % | 5 % | 5 % |
| highly dispersed silicic acid | 5 % | 5 % | - |
| Kaolin | 65 % | 40 % | - |
| Talcum | - | | 20 |

The active ingredient is thoroughly mixed with the adjuvants and the mixture is thoroughly ground in a suitable mill, affording powders that can be used directly for seed treatment.

| Emulsifiable concentrate | |
|---|---|
| active ingredient | 10 % |
| octylphenol polyethylene glycol ether (4-5 mol of ethylene oxide) | 3 % |
| calcium dodecylbenzenesulfonate | 3 % |
| castor oil polyglycol ether (35 mol of ethylene oxide) | 4 % |
| Cyclohexanone | 30 % |
| xylene mixture | 50 % |

Emulsions of any required dilution, which can be used in plant protection, can be obtained from this concentrate by dilution with water.

| Dusts | a) | b) | c) |
|---|---|---|---|
| Active ingredient | 5 % | 6 % | 4 % |
| Talcum | 95% | - | - |
| Kaolin | - | 94 % | - |
| mineral filler | - | - | 96 % |

Ready-for-use dusts are obtained by mixing the active ingredient with the carrier and grinding the mixture in a suitable mill. Such powders can also be used for dry dressings for seed.

| Extruder granules | |
|---|---|
| Active ingredient | 15 % |
| sodium lignosulfonate | 2 % |
| carboxymethylcellulose | 1 % |
| Kaolin | 82 % |

The active ingredient is mixed and ground with the adjuvants, and the mixture is moistened with water. The mixture is extruded and then dried in a stream of air.

| Coated granules | |
|---|---|
| Active ingredient | 8 % |
| polyethylene glycol (mol. wt. 200) | 3 % |
| Kaolin | 89 % |

The finely ground active ingredient is uniformly applied, in a mixer, to the kaolin moistened with polyethylene glycol. Non-dusty coated granules are obtained in this manner.

| Suspension concentrate | |
|---|---|
| active ingredient | 40 % |
| propylene glycol | 10 % |
| nonylphenol polyethylene glycol ether (15 mol of ethylene oxide) | 6 % |
| Sodium lignosulfonate | 10 % |
| Carboxymethylcellulose | 1 % |
| silicone oil (in the form of a 75 % emulsion in water) | 1 % |
| Water | 32 % |

The finely ground active ingredient is intimately mixed with the adjuvants, giving a suspension concentrate from which suspensions of any desired dilution can be obtained by dilution with water. Using such dilutions, living plants as well as plant propagation material can be treated and protected against infestation by microorganisms, by spraying, pouring or immersion.

| Flowable concentrate for seed treatment | |
|---|---|
| active ingredient | 40 % |
| propylene glycol | 5 % |
| copolymer butanol PO/EO | 2 % |
| tristyrenephenole with 10-20 moles EO | 2 % |
| 1,2-benzisothiazolin-3-one (in the form of a 20% solution in water) | 0.5 % |
| monoazo-pigment calcium salt | 5 % |
| Silicone oil (in the form of a 75 % emulsion in water) | 0.2 % |
| Water | 45.3 % |

The finely ground active ingredient is intimately mixed with the adjuvants, giving a suspension concentrate from which suspensions of any desired dilution can be obtained by dilution with water. Using such dilutions, living plants as well as plant propagation material can be treated and protected against infestation by microorganisms, by spraying, pouring or immersion.

In a preferred embodiment, one or more compounds defined in the first aspect, optionally in combination with one or more further compounds, is a plant propagation material, preferably seed, treating composition.

Using such formulations either straight or diluted, plant propagation material can be treated and protected against damage, for example, from pathogen(s), by, for example, spraying, pouring or immersing.

In an embodiment of each aspect of the present invention, suitable compounds are one or more isazofos, fosthiazate, cadusafos, fenamiphos and fensulfothion, especially preferred are one or more isazofos, fosthiazate and cadusafos.

Each of isazofos, fosthiazate, cadusafos, fenamiphos, fensulfothion and aldicarb and combinations thereof with another pesticide(s) are distinguished by the fact that they are especially well tolerated by plants and are environmentally friendly.

In an embodiment, cadusafos is applied on cotton seeds.

In an embodiment, isazofos is applied on tomato seeds.

In an embodiment, fosthiazate is applied on tomato seeds.

In an embodiment, fenamiphos or fensulfothion is applied on tomato seeds.

In an embodiment, aldicarb is applied on tomato seeds.

In an embodiment, each of isazofos, fosthiazate, cadusafos, fenamiphos, fensulfothion, aldicarb or a combination thereof, optionally with one or more other pesticides, can also be used to treat stored products, such as grain, for protection against pathogens and/or pests.

In each aspect and embodiment of the invention, "consisting essentially" and inflections thereof are a preferred embodiment of "comprising" and its inflections, and "consisting of" and inflections thereof are a preferred embodiment of "consisting essentially of" and its inflections.

The following Examples are given by way of illustration and not by way of limitation of the invention.

### Biological Examples

### Example 1 - Nematode control by seed treatment with Fosthiazate and Oxamyl

| | | |
|---|---|---|
| Treatment: | Tomato seeds (var. Red Gnome) are treated with a DS formulation (dry powder for seed treatment) of Fosthiazate or Oxamyl at 0.03, 0.1, 0.3 and 1 mg a.i. /seed. | |
| Test design: | 6 replicates per treatment and exposure timing, each replicate consisted of an individually potted tomato plant. Two exposure timings, 14 and 28 days after sowing. | |
| Procedures: | Seeds are planted into 9-cm diameter pots, which are filled with 270 mL of soil. After placing the seeds on the soil surface they are covered with 60 mL of soil. After sowing, the pots are transferred to the greenhouse chambers, set up in a random fashion and irrigated as necessary from above. | |
| | 14 days after sowing, six pots are inoculated with 6000 *M. incognita* eggs each by dispensing an aqueous egg suspenision into three holes drilled into the soil. The holes are then covered with soil. | |
| | 28 days after sowing, six further pots are inoculated with 9000 *M. incognita* eggs each by dispensing an aqueous egg suspenision into three holes drilled into the soil. The holes are then covered with soil. | |
| | 28 days after inoculation the roots of the plants are examined for galling. The galling is assessed using an index adapted from Zeck (1971). Efficacy is calculated as percent reduction of the gall rating. | |

| Rating: | Score | Description |
|---|---|---|
| | 0.1 | up to 10 galls per root system |
| | 0.2 | up to 20 galls per root system |
| | 1 | above 20 galls per root system, but generally single galls |
| | 2 | low infection level, generally single galls, easy to recognise |
| | 3 | small, some merged galls, easy to recognise, root growth not |
| | | inhibited |
| | 4 | many small galls, several merged galls, root growth not inhibited |
| | 5 | as many merged galls as single galls, root growth slightly inhibited |
| | 6 | majority of galls are merged, root growth shows inhibition |
| | 7 | mainly merged galls, hardly an single galls visible, strong inhibition of root growth |
| Conditions: | 25 ± 3 °C daytime, 23 ± 2 °C night, 50 - 60 % rH., 14 hours photoperiod (supplemented by artificial lighting). | |
| Results: | The untreated control plants inoculated at 14 days after sowing have an average rating of 3.5. Oxamyl at 1 mg a.i. /seed is also rated at 3.5. Fosthiazate at 1 mg a.i. /seed is rated at 1.4 equivalent to 59 % efficacy. | |
| | The untreated control plants inoculated at 28 days after sowing have an average rating of 2.9. Oxamyl at 1 mg a.i. /seed is rated at 2.8. Fosthiazate at 1 mg a.i. /seed is rated at 1.8 equivalent to 40 % efficacy. | |
| | Efficacy results are illustrated below. | |

| Efficacy (%) at the two-week exposure: | | | | |
|---|---|---|---|---|
| Compound | Loading rate (mg a.i./ seed) | | | |
| | 0.03 | 0.1 | 0.3 | 1 |
| Fosthiazate | 0 | 40 | 28.6 | 59.4 |
| Oxamyl | 7.1 | 0 | 0 | 0 |

| Efficacy (%) at the four-week exposure: | | | | |
|---|---|---|---|---|
| Compound | Loading rate (mg a.i./ seed) | | | |
| | 0.03 | 0.1 | 0.3 | 1 |
| Fosthiazate | 0 | 0 | 10.9 | 40.0 |
| Oxamyl | 0 | 2.9 | 0 | 4.5 |

### Example 2 - Nematode control by seed treatment with Ethoprophos, Fenamiphos, Phorate, Isazofos, and Aldicarb

| | | |
|---|---|---|
| Treatment: | Tomato seeds (var. Red Gnome) are treated with a DS formulation (dry powder for seed treatment) of Ethoprophos, Fenamiphos, Phorate, Isazofos or Aldicarb at 0.03, 0.1, 0.3 and 1 mg a.i. /seed. | |
| Test design: | 6 replicates per treatment, each replicate consisted of an individually potted tomato plant. The untreated control is replicated 10 times. | |
| Procedures: | Seeds are planted into 9-cm diameter pots, which are filled with 270 mL of soil. After placing the seeds on the soil surface they are covered with 60 mL of soil. After sowing, the pots are transferred to the greenhouse chambers, set up in a random fashion and irrigated as necessary from above. 14 days after sowing, each pot is inoculated with 6000 *M. incognita* eggs by dispensing an aqueous egg suspenision into three holes drilled into the soil. The holes are then covered with soil. 28 days after inoculation the roots of the plants are examined for galling. The galling is assessed using an index adapted from Zeck (1971). Efficacy is calculated as percent reduction of the gall rating. | |
| Rating: | Score | Description |
| | 0.1 | up to 10 galls per root system |
| | 0.2 | up to 20 galls per root system |
| | 1 | above 20 galls per root system, but generally single galls |
| | 2 | low infection level, generally single galls, easy to recognise |
| | 3 | small, some merged galls, easy to recognise, root growth not inhibited |
| | 4 | many small galls, several merged galls, root growth not inhibited |
| | 5 | as many merged galls as single galls, root growth slightly inhibited |
| | 6 | majority of galls are merged, root growth shows inhibition |
| | 7 | mainly merged galls, hardly an single galls visible, strong inhibition of root growth |
| Conditions: | 25 ± 3 °C daytime, 23 ± 2 °C night, 50 - 60 % rH., 14 hours photoperiod (supplemented by artificial lighting). | |
| Results: | The untreated control plants have an average rating of 4.6. Ethoprophos at 1 mg a.i. /seed did not germinate. At 0.3 mg /seed, Ethoprophos is rated at 4.5. Fenamiphos at 1 mg /seed is rated 3.2, Phorate at 1 mg /seed is rated 4.3, Isazofos at 1 mg /seed is rated 0.6, and Aldicarb at 1 mg /seed is rated 3.8. | |
| | Efficacy results are illustrated below. | |

| Efficacy (%): | | | | |
|---|---|---|---|---|
| Compound | Loading rate (mg a.i./ seed) | | | |
| | 0.03 | 0.1 | 0.3 | 1 |
| Isazofos | 4.0 | 2.2 | 34.8 | 87.0 |
| Aldicarb | 5.8 | 5.8 | 11.2 | 16.7 |
| Ethoprofos | 4.0 | 2.2 | 2.2 | - |
| Fenamiphos | 9.4 | 5.8 | 14.9 | 31.2 |
| Phorate | 22.1 | 2.2 | 2.2 | 5.8 |

### Example 3 - Nematode control by seed treatment with Cadusafos, Chlorpyrifos, Diazinon, Dichlofenthion, Dimethoate, Fensulfothion, Phosphamidon, Terbufos

| | | |
|---|---|---|
| Treatment: | Tomato seeds (var. Red Gnome) are treated with a DS formulation (dry powder for seed treatment) of Cadusafos, Chlorpyrifos, Diazinon, Dichlofenthion, Dimethoate, Fensulfothion, Phosphamidon or Terbufos at 0.01, 0.03, 0.1, 0.3 and 1 mg a.i. /seed. | |
| Test design: | 6 replicates per treatment, each replicate consisted of an individually potted tomato plant. | |
| Procedures: | Seeds are planted into 9-cm diameter pots, which are filled with 270 mL of soil. After placing the seeds on the soil surface they are covered with 60 mL of soil. After sowing, the pots are transferred to the greenhouse chambers, | |
| | set up in a random fashion and irrigated as necessary from above. 14 days after sowing, each pot is inoculated with 6000 *M. incognita* eggs by dispensing an aqueous egg suspenision into three holes drilled into the soil. The holes are then covered with soil. 28 days after inoculation the roots of the plants are examined for galling. The galling was assessed using an index adapted from Zeck (1971). Efficacy is calculated as percent reduction of the gall rating. | |

| Rating: | Score | Description |
|---|---|---|
| | 0.1 | up to 10 galls per root system |
| | 0.2 | up to 20 galls per root system |
| | 1 | above 20 galls per root system, but generally single galls |
| | 2 | low infection level, generally single galls, easy to recognise |
| | 3 | small, some merged galls, easy to recognise, root growth not inhibited |
| | 4 | many small galls, several merged galls, root growth not inhibited |
| | 5 | as many merged galls as single galls, root growth slightly inhibited |
| | 6 | majority of galls are merged, root growth shows inhibition |
| | 7 | mainly merged galls, hardly an single galls visible, strong inhibition of root growth |
| Conditions: | 25 ± 3 °C daytime, 23 ± 2 °C night, 50 - 60 % rH., 14 hours photoperiod (supplemented by artificial lighting). | |
| Results: | The untreated control plants have an average rating of 4.1. Cadusafos at 1 mg a.i. /seed did not germinate. At 0.3 mg /seed, Cadusafos is rated at 3.5. Chlorpyrifos at 1 mg /seed is rated 4.3, Diazinon at 1 mg /seed is rated 4.2, Diclofenthion at 1 mg /seed is rated 4.7, Dimethoate at 1 mg /seed is rated 4.3, Fensulfothion at 1 mg /seed is rated 3.3, Phosphamidon at 1 mg /seed is rated 4.1, and Terbufos at 1 mg /seed is rated 4.1. | |
| | Efficacy results are illustrated below. | |

| Efficacy (%): | | | | | |
|---|---|---|---|---|---|
| Compound | Loading rate (mg a.i./ seed) | | | | |
| | 0.01 | 0.03 | 0.1 | 0.3 | 1 |
| Cadusafos | 0 | 0 | 2.0 | 14.3 | - |
| Chlorpyrifos | 0 | 0 | 0 | 0 | 0 |
| Diazinon | 0 | 0 | 0 | 0 | 0 |
| Dichlofenthion | 0 | 0 | 0 | 0 | 0 |
| Dimethoate | 0 | 2.0 | 2.0 | 0 | 0 |
| Fensulfothion | 0 | 2.0 | 0 | 0 | 20.4 |
| Phosphamidon | 0 | 2.0 | 0 | 0 | 0 |
| Terbufos | 0 | 0 | 0 | 0 | 0 |

### Example 4 - Nematode control by seed treatment with Thiodicarb and Methiocarb

| | | |
|---|---|---|
| Treatment: | Tomato seeds (var. Red Gnome) are treated with Thiodicarb at 0.03, 0.1, 0.3 and 1 mg a.i. /seed or with Methiocarb at 0.01, 0.03, 0.1, 0.3 and 1 mg a.i. /seed. Methiocarb is applied as an FS500 formulation by shaking the seeds with a slurry for 30 seconds in a glass flask. Water is added as required. All treatments were 10 % overdosed to compensate for substance adhering to the flask. Thiodicarb is applied as a DS formulation. | |
| Test design: | 6 replicates per treatment, each replicate consisted of an individually potted tomato plant. | |
| Procedures: | Seeds are planted into 9-cm diameter pots, which are filled with 280 mL of soil. After placing the seeds on the soil surface they are covered with 50 mL of soil. After sowing, the pots are transferred to the greenhouse chambers, set up in a random fashion and irrigated as necessary from above. | |
| | 14 days after sowing each pot is inoculated with 6000 *M. incognita* eggs by dispensing an aqueous egg suspenision into three holes drilled into the soil. The holes are then covered with soil. | |
| | 28 days after inoculation the roots of the plants are examined for galling. The galling is assessed using an index adapted from Zeck (1971). Efficacy is calculated as percent reduction of the gall rating. | |

| Rating: | Score | Description |
|---|---|---|
| | 0.1 | up to 10 galls per root system |
| | 0.2 | up to 20 galls per root system |
| | 1 | above 20 galls per root system, but generally single galls |
| | 2 | low infection level, generally single galls, easy to recognise |
| | 3 | small, some merged galls, easy to recognise, root growth not inhibited |
| | 4 | many small galls, several merged galls, root growth not inhibited |
| | 5 | as many merged galls as single galls, root growth slightly inhibited |
| | 6 | majority of galls are merged, root growth shows inhibition |
| | 7 | mainly merged galls, hardly an single galls visible, strong inhibition of root growth |
| Conditions: | 25 ± 3 °C daytime, 23 ± 2 °C night, 50 - 60 % rH., 14 hours photoperiod (supplemented by artificial lighting). | |
| Results: | The untreated control plants have an average rating of 4.3. Thiodicarb at 1 mg a.i. /seed is also rated at 4.3. Methiocarb at 1 mg a.i. /seed did not germinate. At 0.3 mg Methiocarb /seed only 1 seed out of 6 germinated and is rated at 4.5. At 0.1 mg Methiodicarb /seed the average rating is 4.3. | |

| Efficacy (%): | | | | | |
|---|---|---|---|---|---|
| Compound | Loading rate (mg a.i./ seed) | | | | |
| | 0.01 | 0.03 | 0.1 | 0.3 | 1 |
| Thiodicarb | - | 0 | 0 | 0 | 1.9 |
| Methiocarb | 3.8 | 3.8 | 1.9 | 0 | - |

### Example 5 - Nematode control by seed treatment with Benomyl

| | | |
|---|---|---|
| Treatment: | Tomato seeds (var. Red Gnome) are treated with a DS formulation (dry powder for seed treatment) of Benomyl at 0.1, 0.3 and 1 mg a.i. /seed. | |
| Test design: | 6 replicates per treatment, each replicate consisted of an individually potted tomato plant. | |
| Procedures: | Seeds are planted into 9-cm diameter pots, which are filled with 280 mL of soil. After placing the seeds on the soil surface they are covered with 50 mL of soil. After sowing, the pots are transferred to the greenhouse chambers, set up in a random fashion and irrigated as necessary from above. | |
| | 14 days after sowing each pot is inoculated with 6000 *M. incognita* eggs by dispensing an aqueous egg suspenision into three holes drilled into the soil. The holes are then covered with soil. | |
| | 28 days after inoculation the roots of the plants are examined for galling. The galling is assessed using an index adapted from Zeck (1971). Efficacy is calculated as percent reduction of the gall rating. | |

| Rating: | Score | Description |
|---|---|---|
| | 0.1 | up to 10 galls per root system |
| | 0.2 | up to 20 galls per root system |
| | 1 | above 20 galls per root system, but generally single galls |
| | 2 | low infection level, generally single galls, easy to recognise |
| | 3 | small, some merged galls, easy to recognise, root growth not inhibited |
| | 4 | many small galls, several merged galls, root growth not inhibited |
| | 5 | as many merged galls as single galls, root growth slightly inhibited |
| | 6 | majority of galls are merged, root growth shows inhibition |
| | 7 | mainly merged galls, hardly an single galls visible, strong inhibition of root growth |
| Conditions: | 25 ± 3 °C daytime, 23 ± 2 °C night, 50 - 60 % rH., 14 hours photoperiod (supplemented by artificial lighting). | |
| Results: | The untreated control plants have an average rating of 4.2. Benomyl at 1 mg a.i. /seed is also rated at 4.2. | |
| | Efficacy results are illustrated below. | |

| Efficacy (%): | | | |
|---|---|---|---|
| Compound | Loading rate (mg a.i./ seed) | | |
| | 0.1 | 0.3 | 1 |
| Benomyl | 0 | 2.0 | 0 |

### Example 6 - Nematode control by seed treatment by Cadusafos

| | | |
|---|---|---|
| Treatment: | Cotton seeds (var. Delta Opal) are treated with a DS formulation (dry powder for seed treatment) of Cadusafos at 0.1, 0.3 and 1 mg a.i. /seed. | |
| Test design: | 6 replicates per treatment, each replicate consisted of an individually potted cotton plant. | |
| Procedures: | Seeds are planted into 9-cm diameter pots, which are filled with 270 mL of soil. After placing the seeds on the soil surface they are covered with 60 mL of soil. After sowing, the pots are transferred to the greenhouse chambers, | |
| | set up in a random fashion and irrigated as necessary from above. | |
| | 14 days after sowing each pot is inoculated with 6000 *M. incognita* eggs by dispensing an aqueous egg suspenision into three holes drilled into the soil. The holes are then covered with soil. | |
| | 28 days after inoculation the roots of the plants are examined for galling. The galling is assessed using an index adapted from Zeck (1971). Efficacy is calculated as percent reduction of the gall rating. | |

| Rating: | Score | Description |
|---|---|---|
| | 0.1 | up to 10 galls per root system |
| | 0.2 1 | up to 20 galls per root system above 20 galls per root system, but generally single galls |
| | 2 | low infection level, generally single galls, easy to recognise |
| | 3 | small, some merged galls, easy to recognise, root growth not inhibited |
| | 4 | many small galls, several merged galls, root growth not inhibited |
| | 5 | as many merged galls as single galls, root growth slightly inhibited |
| | 6 | majority of galls are merged, root growth shows inhibition |
| | 7 | mainly merged galls, hardly an single galls visible, strong inhibition of root growth |
| Conditions: | 25 ± 3 °C daytime, 23 ± 2 °C night, 50 - 60 % rH., 14 hours photoperiod (supplemented by artificial lighting). | |
| Results: | The untreated control plants have an average rating of 2.0. Cadusafos at 1 mg a.i. /seed is rated at 0.3 and at 0.3 mg /seed at 0.5. | |
| | Efficacy results are illustrated below. | |

| Efficacy (%): | | | | | |
|---|---|---|---|---|---|
| Compound | Loading rate (mg a.i./ seed) | | | | |
| | 0.01 | 0.03 | 0.1 | 0.3 | 1 |
| Cadusafos | 0 | 0 | 8.3 | 77.5 | 86.7 |

## Claims

1. A method of protecting a plant propagation material and plant organs which grow at a later point in time against attack by a pest, which comprises treating the a plant propagation material with a pesticidal composition comprising one or more selected from isazofos, fosthiazate, cadusafos, fenamiphos, fensulfothion and aldicarb, and at least one auxilary.

2. A method of controlling damage by a pest to crop plants, which comprises treating a a plant propagation material of the crop plant with a pesticidal composition comprising one or more selected from isazofos, fosthiazate, cadusafos, fenamiphos, fensulfothion and aldicarb, and at least one auxilary.

3. A method of improving the growing characteristics of a crop plant, which method comprises treating a plant propagation material of the plant with a pesticidal composition comprising one or more selected from isazofos, fosthiazate, cadusafos, fenamiphos, fensulfothion and aldicarb, and at least one auxilary.

4. The method according to any one of claims 1 to 3 wherein the treatment with the pesticidal composition is prior to planting or sowing of the plant propagation material.

5. The method according to any one of claims 1 to 4 wherein the plant propagation material is a seed.

6. The method according to any one of claims 1 to 5 wherein the pesticidal composition further comprises one or more compounds selected from azoxystrobin; fluoxastrobin, bitertanol; benalaxyl, benalaxyl-M, carboxin; Cu₂O; cymoxanil; cyproconazole; cyprodinil; dichlofluamid; difenoconazole; diniconazole; epoxiconazole; fenpiclonil; fludioxonil; fluquiconazole; flusilazole; flutriafol; furalaxyl; guazatin; hexaconazole; hymexazol; imazalil; imibenconazole; ipconazole; kresoxim-methyl; mancozeb; metalaxyl; R-metalaxyl; metconazole; myclobutanil; oxadixyl, pefurazoate; penconazole; pencycuron; prochloraz; propiconazole; pyroquilone; spiroxamin; tebuconazole; thiram, thiabendazole; tolifluamide; trifloxystrobin, triazoxide; triadimefon; triadimenol; triflumizole; triticonazole, uniconazole, thiamethoxam, imidacloprid, acetamiprid, nitenpyram, thiocloprid, dinotefuran, clothianidin, lamda-cyhalothrin, tefluthrin, β-cyfluthrin, permethrin, abamectin, fipronil, thiodicarb and spinosad.

7. The method according to any one of claims 1 to 7 wherein the pest is selected from the class Nematoda.

8. A plant propagation material treated with one or more selected from isazofos, fosthiazate, cadusafos, fenamiphos, fensulfothion and aldicarb.

9. A plant propagation material treatment composition comprising comprising one or more selected from isazofos, fosthiazate, cadusafos, fenamiphos, fensulfothion and aldicarb, and at least one auxilary.

10. The composition according to claim 9 wherein the composition further comprises one or more compounds selected from azoxystrobin; fluoxastrobin, bitertanol; benalaxyl, benalaxyl-M, carboxin; Cu₂O; cymoxanil; cyproconazole; cyprodinil; dichlofluamid; difenoconazole; diniconazole; epoxiconazole; fenpiclonil; fludioxonil; fluquiconazole; flusilazole; flutriafol; furalaxyl; guazatin; hexaconazole; hymexazol; imazalil; imibenconazole; ipconazole; kresoxim-methyl; mancozeb; metalaxyl; R-metalaxyl; metconazole; myclobutanil; oxadixyl, pefurazoate; penconazole; pencycuron; prochloraz; propiconazole; pyroquilone; spiroxamin; tebuconazole; thiram, thiabendazole; tolifluamide; trifloxystrobin, triazoxide; triadimefon; triadimenol; triflumizole; triticonazole, uniconazole, and thiamethoxam, imidacloprid, acetamiprid, nitenpyram, thiocloprid, dinotefuran, clothianidin, lamda-cyhalothrin, tefluthrin, β-cyfluthrin, permethrin, abamectin, fipronil, thiodicarb and spinosad.
